Europäisches Patentamt

European Patent Office

Office européen des brevets

(19)

(11) Veröffentlichungsnummer: **0 215 868**
**B1**

(12) # EUROPÄISCHE PATENTSCHRIFT

(45) Veröffentlichungstag der Patentschrift:
**14.06.89**

(51) Int. Cl.⁴: **B 25 B  5/14, B 23 K  37/04**

(21) Anmeldenummer: **86901858.0**

(22) Anmeldetag: **11.03.86**

(86) Internationale Anmeldenummer:
**PCT/EP 86/00131**

(87) Internationale Veröffentlichungsnummer:
**WO  86/05430  (25.09.86 Gazette 86/21)**

(54) **VORRICHTUNG ZUM GEGENSEITIGEN ZENTRIEREN UND SPANNEN VON ZWEI MITEINANDER ZU VERSCHWEISSENDEN ROHRKÖRPERN.**

(30) Priorität: **14.03.85  DE 8507555 U**
**11.09.85  DE 8525952 U**

(43) Veröffentlichungstag der Anmeldung:
**01.04.87 Patentblatt 87/14**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**DE-A- 2 522 465**
**DE-A- 2 708 040**
**DE-C- 3 233 796**
**DE-U- 8 507 555**
**DE-U- 8 525 952**
**FR-A- 2 443 008**
**FR-A- 2 509 211**
**US-A- 4 387 845**

(73) Patentinhaber: **Tesch, Klaus, Dorotheenstrasse 123,**
**D-2000 Hamburg 60 (DE)**

(72) Erfinder: **Tesch, Klaus, Dorotheenstrasse 123,**
**D-2000 Hamburg 60 (DE)**

(74) Vertreter: **Glawe, Delfs, Moll & Partner Patentanwälte,**
**Postfach 26 01 62 Liebherrstrasse 20,**
**D-8000 München 26 (DE)**

### Beschreibung

Die Erfindung bezieht sich auf eine Vorrichtung zum gegenseitigen Zentrieren und Spannen von zwei miteinander zu verschweißenden, eine runde Bohrung enthaltenden Werkstücken, die für jedes der Werkstücke beiderseits eines mit Schutzgaszuführung versehenen Schweißbereichs eine Spanneinheit aufweist, die wenigstens eine Umfangsreihe von in einer Spann-Nut enthaltenen Spanngliedern umfaßt, die durch gegenseitige axiale Näherung bzw. Entfernung der Flanken der Spann-Nut nach außen spannbar bzw. nach innen entspannbar sind und eine nach außen weisende Spannfläche für den Kontakt mit der Bohrungsfläche des Werkstücks sowie in Umfangrichtung voneinander Abstand aufweisen und deren Zwischenräume von dem Schutzgas durchströmt sind.

Bei einer bekannten Vorrichtung dieser Art (DE-A 27 08 040) enthält jede der Spann-Nuten eine Mehrzahl von speziell geformten Spannkeilen, die ihrerseits an ihrer dem Rohrumfang zugewendeten Außenfläche einen Spannschuh tragen, der sich großflächig an die zu spannende Rohrinnenfläche anlegen kann. Die Spannkeile werden mittels einer Anzahl von in Umfangsrichtung verlaufenden Zugfedern innerhalb der Spann-Nuten gehalten. Die Spann-Nuten werden einerseits von einer fest angeordneten Nutwand und andererseits von einem hydraulischen Kolben gebildet, der zum Spannen der Spannkeile durch Druckmittelbeaufschlagung relativ zur Nutwand axial verschoben werden kann. Obwohl die bekannte Spannvorrichtung für ein Laserschweißverfahren bestimmt ist und die Spannschuhe daher vergleichsweise sicher sind vor Beschädigung mit Rücksicht auf ihre Beanspruchung durch die Spannkräfte und die Wärmebelastung, sind die Spannkeile und Spannschuhe der bekannten Vorrichtung recht grob ausgeführt. Dies hat zwar den Nachteil, daß die gesamte Konstruktion verhältnismäßig schwer ausfällt; jedoch wird dies zum Teil auch als vorteilhaft angesehen, weil es die Wärmeabfuhr erleichtert (Automation 1977, S. 59), wobei die Spannschuhe zu diesem Zweck auch noch mit besonderen Kühlkanälen versehen sein können (US-A 4 387 845). — Ein weiterer Nachteil der großteiligen Ausführung der Spannschuhe besteht darin, daß sie die vollständige Entfernung der atmosphärischen Luft durch das dem Schweißbereich zugeführte Schutzgas erschweren. Zwar wird in der bereits genannten Veröffentlichung (DE-A 2 780 040) nicht ausdrücklich von Schutzgaszuführung gesprochen. Da aber ein Versorgungsstrang mit Zuleitungen für verschiedene Gase erwähnt ist und die dort vorgesehene Laserschweißung lediglich für hochwertige Schweißnähte verwendet wird, die unter Schutzgas erzeugt werden, muß vorausgesetzt werden, daß der zwischen den Spannschuhen befindliche Schweißbereich mit Schutzgas beaufschlagt wird. Eine vollständige Verdrängung des Luftsauerstoffs kann dabei aber nicht erwartet werden, weil einerseits die Spannschuhe großteilig sind und daher eine gleichmäßige Strömung verhindern und andererseits wegen der großen Strömungsquerschnitte zwischen den Spannschuhen keine merkliche Druckdifferenz erzeugt wird, die den Strömungsvorgang vergleichmäßigen könnte.

— Angestrebt wird bei den bekannten Vorrichtungen eine so genau zentrierte Führung der Spannglieder, daß diese eine verformte Rohrfläche zylindrisch ausrichten können. Je geringer die Zahl der Spannglieder ist, um so beschränkter sind aber die Möglichkeiten einer genau zentrierten Bewegungsführung.

— Bekannt ist schließlich (DE-A 32 33 796) als Spannglieder eine Anzahl gleichmäßig über den Umfang verteilter Kugeln zu verwenden, die in radialen Führungsbohrungen einer Hülse unter dem Einfluß eines axial verschieblichen Konus nach außen gegen die Innenwand der zu verschweißenden Rohrteile spannbar sind. Diese Anordnung ist vergleichsweise aufwendig und erschwert auch wegen der Vielzahl der mit dem Schweißbereich in Verbindung stehenden Hohlräume in den Führungsbohrungen sowie zwischen der Hülse und dem Konus die vollständige Verdrängung des Luftsauerstoffs, zumal die Abstände in Umfangsrichtung zwischen den Kugeln groß sind.

Der Erfindung liegt die Aufgabe zugrunde, eine Spannvorrichtung der eingangs genannten Art zu schaffen, die einfach aufgebaut und variabel und zuverlässig anwendbar ist, wobei eine hinreichende Kühlung und bei mäßigem Schutzgasverbrauch eine zuverlässige Sauerstoffverdrängung sichergestellt sein soll.

Die erfindungsgemäße Lösung besteht darin, daß die Reihe von Spanngliedern von einer Vielzahl in Umfangsrichtung mit geringem Abstand voneinander angeordneten Windungen mit einer Schraubenfeder oder einen Federstrang mit einer Vielzahl von aufgereihten Scheiben, die durch Zwischenscheiben auf Abstand gehalten sind, gebildet ist.

In Abkehr von den bisherigen Konstruktionsprinzipien werden die einzelnen Spannglieder nicht in kleiner Zahl großteilig ausgeführt, sondern umgekehrt in großer Zahl kleinteilig. Da sie in Umfangsrichtung nur eine geringe Ausdehnung haben und insbesondere ihre Kontaktfläche mit der Rohrinnenfläche in Umfangsrichtung klein ist, sind auch die Störeinflüsse, die einerseits vom Schweißbereich und andererseits als thermische Beanspruchung von der Rohrinnenfläche her auf sie eindringen, gering gehalten im Vergleich mit der Kühlwirkung des Schutzgases, die deshalb sehr intensiv ist, weil die axiale Ausdehnung der Spannglieder vergleichsweise groß ist und daher eine große Kühlfläche zur Verfügung gestellt wird. Die kleinen Spannglieder wirken bei der Verdrängung des Luftsauerstoffs durch das Schutzgas nicht als Barrieren, sondern in ihrer Vielzahl in Verbindung mit den zwischen ihnen befindlichen kleinen Durchgangsquerschnitten eher wie ein gleichmäßiger Drosselwiderstand, der die gleichmäßige Sauerstoffverdrängung begünstigt, wobei infolge der geringen Ausdehnung der Spannglieder die Bildung von Taschen verhindert wird, in denen sich Luftsauerstoffreste halten könnten, und Barrieren vermieden werden, die den Spülvorgang hindern könnten. Dabei findet durch den Spülgasdurchsatz nicht nur eine gleichmäßige Kühlung der Spannglieder sondern auch der Rohrinnenfläche statt. Die kleine Ausdehnung der Spannglieder in Umfangsrichtung erlaubt es auch, sie in Radialrichtung klein zu gestalten, so daß die Oberfläche des sie tragenden Haltekörpers sehr nahe an die Rohrinnenfläche heranrückt, was den Kühleffekt günstig beeinflußt.

Zweckmäßigerweise sind die Spannflächen der Spannglieder im wesentlichen punktförmig, was durch eine gewölbte Außenfläche derselben erreicht werden kann. Dadurch wird der Wärmetransport von der Rohrinnenfläche auf die Spannglieder und damit deren Überhitzungsgefahr verringert. Eine Schraubenfeder hat sich deshalb als besonders vorteilhaft erwiesen, weil sie ein sehr einfaches und preiswertes Bauteil ist, das klar definierte Führungs- und Spannflächen sowohl im Zusammenwirken mit den Führungsflächen der Spann-Nut als auch mit der Rohrinnenfläche aufweist. Sie kann leicht montiert und ausgewechselt werden, indem sie einfach von außen über den Haltekörper gestreift wird. Ihre punktförmige Kontaktfläche zur Rohrinnenfläche schützt sie vor Überhitzung, wobei sie gleichzeitig dem Schutzgas eine große Kühlfläche darbietet Bei geringem Windungsabstand wirkt jeder Durchtrittsquerschnitt als Strömungswiderstand, wodurch ein gedrosselter und trotzdem völlig gleichmäßiger Schutzgasdurchsatz über den gesamten Umfang erzielt wird. Störungen durch anhaftende Partikel treten selten auf, weil sie sich wegen der Kleinheit der mit der Rohrinnenfläche zusammenwirkenden Spannflächen und der Nachgiebigkeit der Federwindungen beim Spannen leicht wegdrücken lassen. Die große Anzahl der von den Windungen gebildeten Spannglieder wirkt statistisch völlig gleichmäßig, so daß eine ausgezeichnete Ausrundung auch verformter Rohrquerschnitte erzielt wird.

Ein großer Vorteil der Erfindung besteht auch darin, daß sich die Federn leicht auswechseln lassen, und zwar auch am Ort der Benutzung. Dies gilt nicht nur bei Beschädigung, sondern ermöglicht auch die Verwendung von Federn von unterschiedlichen Windungsdurchmessern zum Ausgleich von Durchmessertoleranzen der Werkstücke. So kann beispielsweise der Durchmesserbereich für den eine bestimmte Vorrichtung geeignet ist, durch Verwendung dickerer Federn ausgeweitet werden. Ein Federwechsel kann auch dann erwünscht sein, wenn das Material der Werkstücke nur mit bestimmtem Federmaterial in Berührung kommen soll.

Über die Weite der Zwischenräume kann allgemein gesagt werden, daß diese so gering sein soll, daß eine Drosselwirkung für das Schutzgas mit einem den Zutritt von Luftsauerstoff erschwerenden Druckabfall erzielt wird, wobei andererseits die Durchtrittsquerschnitte möglichst gleichmäßig über den gesamten Umfang verteilt sein sollen. Im allgemeinen soll die Weite der Zwischenräume geringer sein als die Umfangsbreite der Spannglieder. Bei Verwendung einer Schraubenfeder können deren Windungen an der Innenseite zweckmäßigerweise nahezu aneinander anliegen.

Nach einem weiteren Merkmal der Erfindung kann diejenige Nutwand, die dem Schweißbereich zugewandt ist, radial derart weit vorragend ausgebildet sein, daß die Spannglieder von ihr weitgehend abgeschirmt werden. Sie besitzt zu diesem Zweck einen Außendurchmesser, der nur wenige Prozent geringer ist als der lichte Durchmesser der Werkstückbohrung.

Zweckmäßigerweise weist wenigstens eine der beiden Spanneinheiten zwei Spanngliederreihen in axialem Abstand voneinander auf, um nicht nur eine Zentrierung, sondern auch eine axiale Ausrichtung des zu spannenden Rohrteils zu erzielen.

Der konstruktive Aufbau wird besonders einfach, wenn die Spann-Nuten durch Ringe gebildet werden, die teilweise verschiebbar und durch Buchsen verbunden, auf einem Haltekörper sitzen, der dabei auch den Nutgrund der Spann-Nuten bilden kann. Zu derselben Spanneinheit gehörende Nutwände können aus dem Haltekörper zu gemeinsamer Betätigung verschiebbar sein. Zu verschiedenen Spanneinheiten gehörende Nutwände können hingegen fest am Haltekörper angeordnet sein, wobei dieser zweckmäßigerweise im Wege der Antriebskraft angeordnet ist, damit nur eine Antriebsbewegung zum Antrieb beider Spanneinheiten erforderlich ist. Nach einem weiteren Merkmal der Erfindung können beide Spanneinheiten trotz des Vorhandenseins von nur einem Antrieb gesondert voneinander betätigt werden. Dies wird dadurch erreicht, daß alle Spann-Nuten der beiden Spanneinheiten in bezug auf den Antrieb hintereinander geschaltet sind und parallel zu den Spann-Nuten einer der Spanneinheiten eine der Antriebskraft entgegenwirkende Feder vorgesehen ist. Diese Feder bewirkt, daß bei anfänglicher Betätigung des Antriebs die ihr zugeordnete Spanneinheit einstweilen von der Antriebskraft entlastet bleibt, so daß nur die andere Spanneinheit gespannt wird. Dies ermöglicht es, durch langsames Einsetzen des Antriebs die beiden Spanneinheiten stufenweise nacheinander zur Einwirkung zu bringen, um zunächst in Ruhe eines der beiden zu spannenden Werkstücke und später erst das andere spannen zu können. Wenn ein druckmittelbetätigter Antrieb verwendet wird, kann ein Schalter vorgesehen sein, der die Beaufschlagung des Antriebs mit einem mittleren Druck ermöglicht, dessen Größe zwar zum Spannen der einen Spanneinheit, nicht aber zum Überwinden der der anderen Spanneinheit zugeordneten Feder ausreicht, so daß auf diese Weise die Spannvorrichtung so eingestellt werden kann, daß lediglich eine ihrer beiden Spanneinrichtungen aktiviert ist.

Zweck besserer Kühlung kann für den Haltekörper ein Kühlflüssigkeitskreislauf vorgesehen sein.

Da für beide Spanneinheiten derselbe Druckmittelantrieb verwendet wird und der Druckmittelverbrauch daher vergleichsweise gering ist, kann nach der Erfindung Schutzgs als Druckmittel für den Antrieb verwendet werden, was den Vorteil hat, daß im Falle einer Leckage des Antriebszylinders kein Schaden durch zur Schweißstelle gelangendes, fremdes Druckmittel geschehen kann, und daß die Anordnung durch Einsparung einer weiteren Mediumszufuhr leichter und einfacher wird.

Die Erfindung wird im folgenden näher unter Bezugnahme auf die Zeichnung erläutert, die vorteilhafte Ausführungsbeispiele veranschaulicht. Darin zeigen:

Fig. 1 bis 3 Längsschnitte durch drei unterschiedliche Ausführungsformen der Vorrichtung,

Fig. 4 eine von radial außen auf eine Spann-Nut und die darin enthaltene Feder gesehene, perspektivische, vergrößerte Ansicht,

Fig. 5 einen Schnitt mit Blickrichtung in Umfangsrichtung durch die Anordnung gemäß Fig. 4 und

Fig. 6 die Seitenansicht von einer Reihe von scheibenförmigen Spanngliedern.

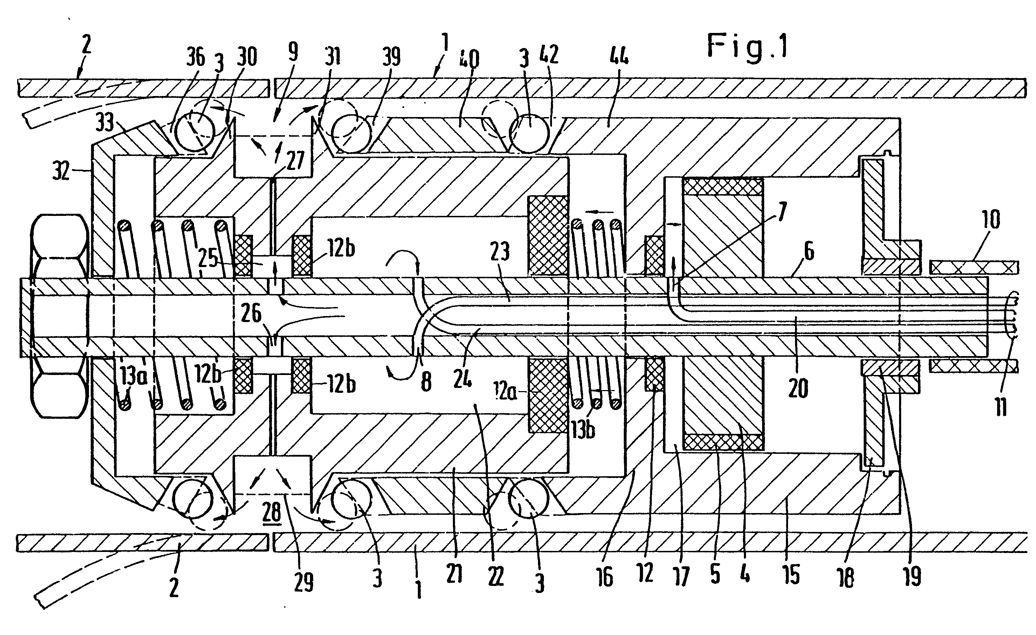

Die in Fig. 1 dargestellte Spannvorrichtung dient dazu, die Rohrenden 1 und 2 im Bereich ihrer Stoßstelle fest und genau miteinander fluchtend zu spannen, so daß sie mittels einer automatischen Rundschweißmaschine von außen problemlos miteinander verschweißt werden können. Ein wichtiges Anwendungsgebiet ist beispielsweise die Herstellung von Rohrpostleitungen, bei denen sehr hohe Anforderungen an die Fluchtgenauigkeit der Rohrwände zur Vermeidung von störenden Absätzen oder Stufen gestellt werden.

Auf der Kolbenstange 6 ist ein Kolben 4 fest angeordnet, der innerhalb eines Zylinders 15 mit dessen Endwand 16 einen Zylinderraum 17 einschließt. Am Umfang ist der Kolben 4 mittels einer Dichtung 5 gegenüber dem Zylinder 15 abgedichtet. Die Zylinderendwand 16 ist gegenüber der darin verschiebbaren Kolbenstange 6 mittels einer Dichtung 12 abgedichtet. Das andere Ende des Zylinders 15 ist durch eine Scheibe 18 geschlossen, die eine Führungsnabe 19 für die Kolbenstange 6 enthält.

Die Kolbenstange ist rohrförmig, am linken Ende geschlossen und am rechten Ende offen ausgeführt. Durch ihren Hohlraum ist eine Leitung 20 zu einer in der Zeichnung unmittelbar links neben dem Kolben 4 in der Kolbenstange liegenden Öffnung 7 geführt, durch die der Arbeitsraum 17 mit Druckmittel zur Betätigung der Spannvorrichtung beaufschlagt werden kann.

In der Zeichnung links von der Kolbenzylindereinrichtung ist der Haltekörper 21 angeordnet, der im wesentlichen als Hohlzylinder ausgebildet ist, der an seinem rechten Ende mittels einer Dichtungs- und Führungsbuchse 12a und in Abstand davon mittels eines Paars von Führungs- und Dichtungsbuchsen 12b axial verschiebbar und koaxial auf der Kolbenstange 6 gelagert ist. Die Dichtungsbuchsen 12a und 12b schließen innerhalb des Haltekörpers einen Kühlmittelraum 22 ein, der über eine Kühlmittelzuführungsleitung 23 und eine Kühlmittelabführungsleitung 24, die innerhalb des Hohlraums der Kolbenstange 6 gelegen sind, mit einem Kühlmedium, beispielsweise Wasser, durchspült werden kann.

Das Paar von Dichtungs- und Führungsbuchsen 12b schließt einen Ringraum 25 ein, der über eine oder mehrere Bohrungen 26, mit dem Hohlraum der Kolbenstange 6 ständig in Verbindung steht. Außerdem führen mehrere Bohrungen 27 von dem Ringraum 25 radial nach außen zu einem Ringraum 28, der im Außenumfang des Haltekörpers gebildet ist und der zwecks Vergleichmäßigung der Zuströmung ein ringsum laufendes Lochblech 29 enthalten kann. Wenn der Kolbenstangenhohlraum mit Schutzgas beaufschlagt wird, kann durch die Bohrungen 26 und 27 dem Schweißbereich 9 Schutzgas zugeführt werden.

Beiderseits des Ringraums 28 erheben sich auf der Zylinderoberfläche des Haltekörpers zwei Ringvorsprünge 30, 31, die auf ihrer dem Ringraum abgewandten Seite konische Flanken bilden. Daran schließt sich jeweils ein zylindrischer Abschnitt an.

Auf dem linken Ende der Kolbenstange 6 sitzt fest ein Teller 32 mit Kragen 33, der passend über den linken zylindrischen Abschnitt des Haltekörpers 21 greift und eine konische Flanke bildet, die der konischen Flanke des Ringvorsprungs 30 gegenüberliegt und gegensinnig geneigt ist. Die beiden Flanken schließen eine Spann-Nut 36 zur Aufnahme einer ringförmig geschlossenen Schraubenfeder 3 ein, die eine gewisse Zugvorspannung enthält, so daß sie stets in die Stellung geringster Umfangslänge strebt. Die Windungen dieser Feder bilden die Spannglieder und liegen nahezu aneinander an.

Jenseits des Ringraums 28 ist auf dem zylindrischen Abschnitt des Haltekörpers eine Buchse 40 verschiebbar angeordnet, die an beiden Stirnseiten durch konische Flanken begrenzt ist. Die in der Zeichnung links dargestellte konische Flanke schließt mit der Flanke des Ringvorsprungs 31 eine Spann-Nut 39 mit Schraubenfeder 3 ein, die der Spann-Nut 36 gleicht. Die andere Flanke ist an der Bildung einer Spann-Nut 42 für eine Schraubenfeder 3 beteiligt, die auf der anderen Seite von einer konischen Flanke begrenzt wird, die an einem hohlzylindrischen Ansatz 44 des Zylinders 15 angeordnet ist, der über den Außenumfang des Haltekörpers 21 greift.

Zwischen dem Haltekörper 21 und dem Teller 32 einerseits und dem Haltekörper 21 und dem Flansch 16 des Zylinders 15 andererseits sind axial wirkende Druckfedern 13a bzw. 13b als Rückstellfedern angeordnet, wobei die Feder 13a eine größere Druckkraft als die Feder 13b entwickelt.

An das rechte, offene Ende der Kolbenstange 6 ist ein Schlauch 10 fest und dicht angeschlossen, der für die Zuführung des Schutzgases dient und ein Leitungsbündel 11 enthält, nämlich die Kühlmediumsleitungen 23 und 24 sowie im Falle der gesonderten Zuführung des Druckmediums für dieses eine Leitung 20.

Die Spann-Nut 36 mit den zugehörigen Teilen bildet eine Spanneinheit für das Rohr- oder Bogenstück 2, während die Spann-Nuten 39, 42 zu der dem Rohrstück 1 zugeordneten Spanneinheit gehören.

Die Vorrichtung wird in folgender Weise verwendet. Im entspannten Zustand der Vorrichtung liegen die Federn 3 innerhalb der sie aufnehmenden Spann-Nuten. Ihr Außendurchmesser ist kleiner als der Innendurchmesser der Rohrstücke 1 und 2. Die Vorrichtung kann daher an die vorgesehene Stelle gebracht werden, so daß die Schweißstelle vor dem Ringraum 28 liegt.

Wenn der Arbeitsraum 17 der Kolbenzylindereinrichtung 4, 15 mit Druckmittel beaufschlagt wird, so wird die Kolbenstange 6 gegenüber dem Zylinder 15 nach rechts bewegt, wodurch vom linken Ende der Kolbenstange her über den Teller 32, die Feder 13a und den Haltekörper 21 die Feder 13b zusammengedrückt wird, während sich der Haltekörper 21 dem Zylinder 15 nähert. Dabei werden die Spann-Nuten 39, 42 enger, wodurch die in ihnen gehaltenen Federn in der gestrichelt angedeuteten Weise nach außen gepreßt werden, bis sie in Anlage an den Innenumfang des Rohrs 1 gelangen und die Spannvorrichtung dadurch innerhalb dieses Rohres zumindest vorläufig zentrieren und festhalten. Dabei achtet man darauf, daß die zu verschweißende Stirnkante des Rohrstücks 1 mittig vor dem Ringraum 28 zu liegen kommt. Die Kraft der Feder 13a ist so gewählt, daß in diesem Zustand die im Bereich der Nut 36 gebildete Spanneinheit noch nicht in Funktion tritt, so daß das Rohr 2 noch justiert werden kann. Anschließend wird der Druck im Arbeitsraum 17 gesteigert, so daß auch die Feder 13a zusammengedrückt wird und die Spann-Nut 36 der linken Spanneinheit verengt wird und die darin befindliche Schraubenfeder 3 in die gestrichelte Stellung nach außen gepreßt wird, bis auch das Rohr 2 zentriert und gespannt ist. Dabei führt die Feder, wie aus ihrer unterschiedlichen Lage in durchgezogener und gestrichelter Stellung hervorgeht, auch eine axiale Bewegungskomponente durch, die zu einem Gegeneinanderspannen der Stoßflächen der Rohre genutzt werden kann.

Sobald die Spannvorrichtung sich im fertig gespannten Zustand befindet, wird Schutzgas zugeführt, das die atmosphärische Luft aus dem Ringraum 28 und somit aus dem Schweißbereich 9 verdrängt. Die Anordnung ist nun bereit für die automatische Verschweißung des Rohrstoßes von außen her. Zur Vermeidung von Überhitzung der Vorrichtung kann dabei der Halteteil 21 durch Zuführung von Kühlmedium zu dem Kühlmediumsraum 22 gekühlt werden.

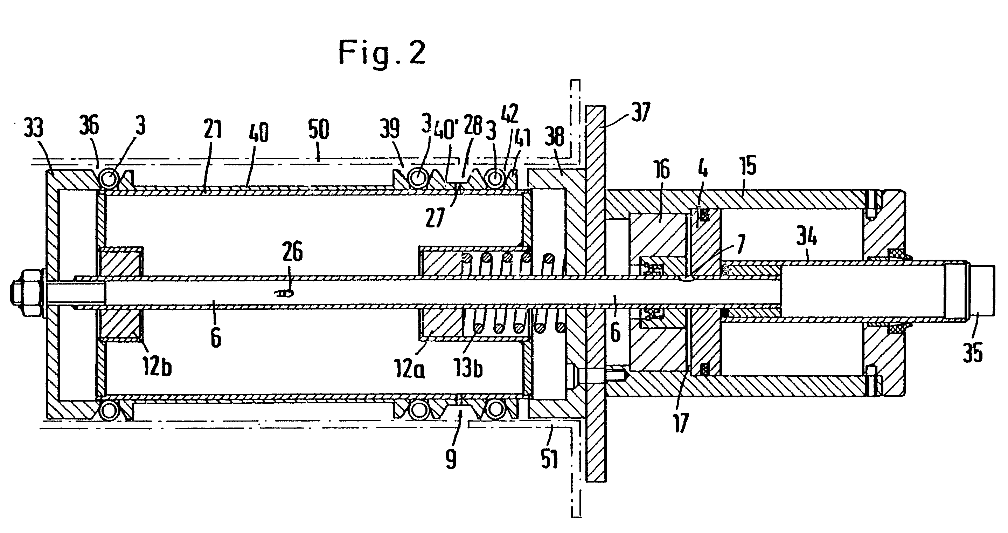

Fig. 2 zeigt eine Spannvorrichtung zum Zusammenspannen eines Rohrstücks 50 mit einem Flansch 51. Solche Teile, die den unter Bezugnahme auf Fig. 1 beschriebenen Teilen gleichen, tragen gleiche Bezugsziffern.

Innerhalb des pneumatischen Zylinders 15 ist zwischen einem Kolben 4 und einer festen Zylinderwand 16 ein Arbeitsraum 17 gebildet. Der Kolben ist auf der in der Zeichnung rechts erscheinenden Seite mit einem Rohr 34 fest verbunden, das am Ende eine Steckerbuchse 35 für den Anschluß eines Druckgasschlauchs aufweist, wobei die Zufuhr des Druckgases mittels einer nicht dargestellten Einrichtung steuerbar ist. Ferner ist mit dem Kolben 4 die Kolbenstange 6 fest verbunden, die sich hauptsächlich auf der in der Zeichnung linken Seite des Kolbens 4 erstreckt und mit dem Innenraum des Rohrs 34 in Verbindung steht und bei 7 eine seitliche Öffnung in den Arbeitsraum 17 aufweist zur Zufuhr von Druckgas zwecks Betätigung der Spannvorrichtung.

Der Zylinder 15 ist fest mit einer Platte 37 verbunden, die im folgenden als Anschlagplatte bezeichnet ist, weil sie einen Anschlag für die Positionierung des zu verschweißenden Flanschteils 51 bildet. Sie trägt auf ihrer vom Zylinder 15 abgewandten Seite einen zylindrischen Kragen 38. Die Kolbenstange 6 ist durch die Anschlagplatte 37 und den Kragen 38 koaxial und in Längsrichtung beweglich hindurchgeführt. An ihrem Ende ist sie mit einem Teller 32 fest verbunden, der einen Kragen 33 aufweist. Zwischen den beiden Kragen 33 und 38 ist ein zylindrischer Haltekörper 21 angeordnet, der in den Bohrungen dieser Kragen geführt sein kann. Zusätzlich oder statt dessen kann er auch mittels Dichtungs- und Führungsbuchsen 12a und 12b in den Naben seiner Stirnwände längsbeweglich auf der Kolbenstange 6 geführt sein. Durch eine Feder 13b ist er an dem Boden des Kragens 38 abgestützt.

Auf dem Haltekörper 21 ist eine zylindrische Hülse 40 geführt, deren verdickte, stirnseitige Enden konische Flanken bilden. Entsprechend konisch ist auch die Stirnflanke des Kragens 33, die der konischen Flanke der Hülse 40 gegenübersteht und mit dieser eine Spann-Nut 36 einschließt, in der eine ringförmig geschlossene Schraubenfeder 3 angeordnet ist, deren einzelne Wendeln die Spannglieder bilden.

Während die Hülse 40 auf dem Haltekörper 21 in Längsrichtung beweglich ist, ist die ebenfalls auf dem Träger angeordnete Hülse 40' in Axialrichtung fest mit diesem verbunden. Auch die Hülse 40' bildet an ihren verdickten Enden Ringvorsprünge 30, 31 mit konischen Flanken, von denen die eine der Flanke der Hülse 40 gegenübersteht und mit dieser eine Spann-Nut 39 für eine Schraubenfeder 3 einschließt, während die andere einer entsprechend konisch geformten Flanke eines axial beweglich auf dem Umfang des Haltekörpers 21 angeordneten Rings 41 gegenübersteht und mit diesem eine Spann-Nut 42 für eine Schraubenfeder 3 einschließt. Der Ring 41 weist im entspannten Zustand der Anordnung, der in der Figur dargestellt ist, Spiel gegenüber dem Stirnende des Kragens 38 auf.

Eine Bohrung 27 ist in dem Haltekörper 21 und der Hülse 40' zwischen den Ringvorsprüngen 30 und 31 vorgesehen. Ferner ist eine Bohrung 26 in der Kolbenstange 6 im Bereich des Haltekörpers 21 angeordnet. Durch diese Bohrungen kann das Schutzgas, das übrigens auch als Druckmedium für den Zylinderraum 17 verwendet wird, in den Schweißbereich 9 der zu spannenden Rohrstücke 50, 51 austreten.

Die Spann-Nuten 36 und 39 mit den zugehörigen Teilen bilden eine Spanneinheit für das Rohrstück 50, während die Spann-Nut 42 mit den ihr zugehörigen Teilen eine zweite Spanneinheit für den Flanschteil 51 bildet.

Die Vorrichtung arbeitet wie folgt.

Im dargestellten, entspannten Zustand können die Rohrstücke 50, 51 auf die Spannvorrichtung in der dargestellten Weise aufgesetzt werden. Wird nun Druckgas mit einem ersten Druck mittlerer Größe von beispielsweise 5 bar über den Anschluß 35 zugeführt, so bewegt sich die Kolbenstange 6 nach rechts in der Zeichnung, wobei Druckkräfte von dem Kragen 33 über die Spann-Nut 36, die Schraubenfeder 3, die Hülse 40, die Spann-Nut 39 und die darin enthaltene Schraubenfeder 3, die Hülse 40', den Haltekörper 21 und die Buchse 12a auf die Feder 13b übertragen werden, die so bemessen ist, daß sie sich bis zu diesem Druck mittlerer Größe praktisch starr verhält oder sich jedenfalls nicht mehr zusammendrücken läßt, als es der Größe des Spiels zwischen den Teilen 38 und 40 entspricht. Dies bedeutet, daß bis zu dieser Druckgrenze lediglich die Schraubenfedern in den Spann-Nuten 36 und 39, durch deren konische Flanken nach außen gepreßt werden, um das Rohrstück 50 auszurichten und zu spannen. Es kann so in aller Ruhe dafür gesorgt werden, daß sich die zu verschweißende Stirnfläche dieses Rohrstücks genau in der Mitte des durch die Ringvorsprünge 30, 31 eingeschlossenen Schweißbereichs befindet. Anschließend läßt man den Druck weiter anwachsen, so daß die Feder 14 zusammengepreßt wird. Es findet dann eine axiale Relativbewegung zwischen der Anschlagplatte 37 und dem inzwischen gespannten Rohrstück 50 in dem Sinne statt, daß der Flansch 51 gegen das Rohrstück 50 geschoben wird. Sobald das Spiel neben dem Ring 41 überwunden ist, wird von dem Kragen 38 der Ring 41 beaufschlagt und wird die Schraubenfeder 3 in der Spann-Nut 42 nach außen gedrückt, wodurch der Flansch 51 zentriert und gespannt wird.

Am Ende dieses Vorgangs sind die Rohrstücke 50, 51 zentriert und liegen ihre Stirnflächen unter Spannung aneinander, wobei sie von Schutzgas umspült werden.

Es ist erkennbar, dass diese Vorrichtung äußerst einfach aufgebaut ist und mit einfachsten Steuermitteln lediglich mit Schutzgas als Steuermedium als Schweißspannvorrichtung betrieben werden kann. Dabei sind die dem Schweißbereich 9 benachbarten Schraubenfedern 3 durch die Ringvorsprünge 30, 31 vom Schweißbereich abgeschirmt und durch weitgehenden Einschluß in kühle Teile der Spannvorrichtung sowie durch gleichmäßige Druckströmung des Schutzgases gut gekühlt, während die Wärme von den bearbeiteten Rohrstücken 50, 51 nur langsam infolge der punktförmig reduzierten Kontaktflächen zu ihnen geleitet wird.

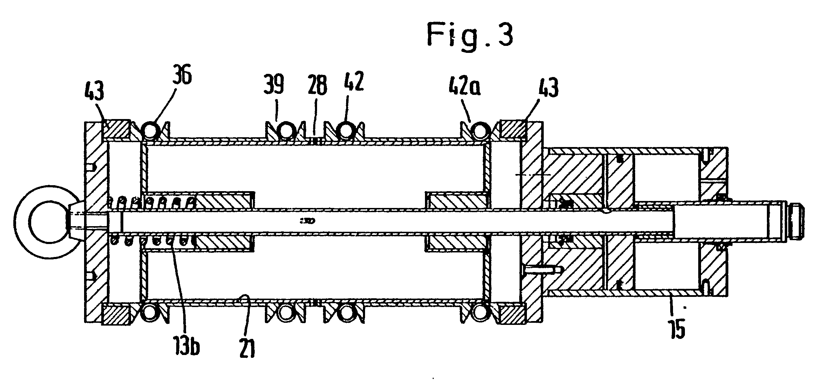

Die Vorrichtung gemäß Fig. 3 gleicht derjenigen gemäß Fig. 2 mit dem Unterschied, daß statt nur einer Spann-Nut 42 der dort für den Flansch 51 vorgesehen war, eine Anordnung von zwei Spann-Nuten 42 und 42a tritt, zwischen denen eine auf dem Haltekörper 21 verschiebbare Hülse angeordnet ist, so daß der rechte Rohrteil nicht nur zentriert, sondern auch fluchtgerecht ausgerichtet wird. Es entfällt auch die Anschlagplatte 37. Statt dessen sind zwei Gleitringe 43 vorgesehen, die aus einem Kunststoff mit niedrigem Reibungskoeffizienten bestehen und radial außen etwas weiter vorragen als die die Spann-Nuten bildenden Ringvorsprünge. Diese Gleitringe erleichtern das Verschieben der Spannvorrichtung innerhalb einer geschlossenen Rohrleitung.

Die Feder 13b ist auf der dem Zylinder 15 abgewandten Seite des Haltekörpers 21 angeordnet. Dies hat zur Folge, daß die dem Zylinder 15 fernere Spanneinheit, zu der die Spann-Nuten 36 und 39 gehören, später gespannt wird als die dem Zylinder 15 nähere Spanneinheit mit den Spann-Nuten 42 und 42a. Selbstverständlich eignet sich diese Vorrichtung nur für das Spannen geradlinig gestreckter Rohrstücke. Falls auf der einen Seite der Schweißstelle auch Rohrbögen vorkommen, so müßte die in Fig. 3 links erscheinende Spanneinheit gekürzt mit nur einer Spann-Nut ausgeführt werden, wie dies in Fig. 1 dargestellt ist.

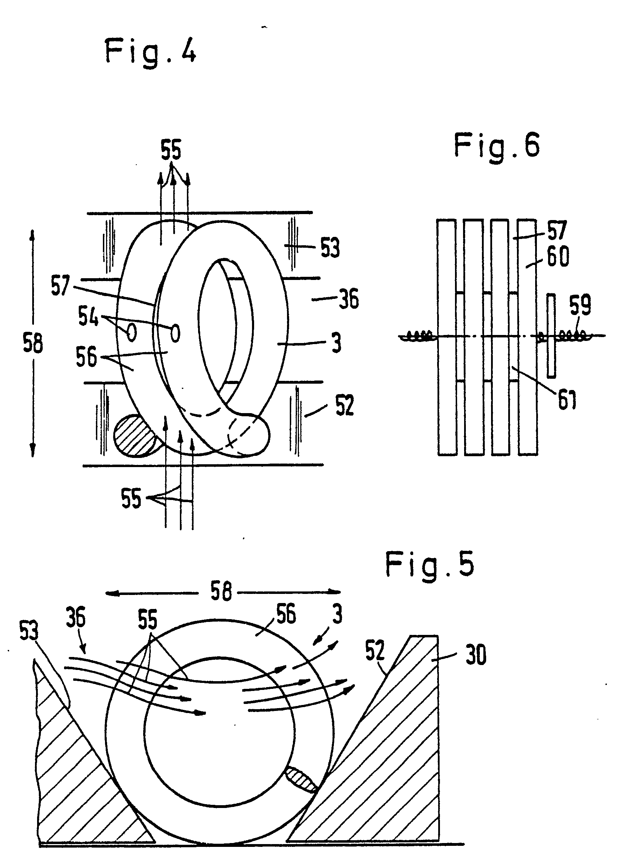

Fig. 4 und 5 veranschaulichen in schräg radial von außen nach innen gerichteter Blickrichtung sowie in Umfangsrichtung zwei Windungen 56 einer Schraubenfeder 3, die zwischen den konischen Flanken 52, 53 einer Spann-Nut 36 gehalten sind und je ein Spannglied repräsentieren. Da sie aus im Querschnitt runden Drähten gebogen sind, haben sie eine gewölbte, nach außen weisende Oberfläche, die mit der Bohrungsfläche der zu spannenden Werkstücke lediglich Punktkontakt eingeht, wie dies durch sehr kleine Spannflächen 54 in der Zeichnung angedeutet ist. Die Ausmaße dieser Spannflächen sind wesentlich kleiner als die axiale Ausdehnung 58 der einzelnen Windungen, so daß der zwischen ihnen durch den sehr kleinen Zwischenabstand 57 hindurchstreichende Schutzgasstrom 55 an den einzelnen Windungen eine Kühlfläche vorfindet, die vielfach größer ist als die Größe der Spannflächen 54. Die Windungen der Schraubenfeder werden dadurch sehr wirksam gekühlt; die Gefahr der Überhitzung besteht nicht.

Fig. 6 veranschaulicht, daß eine ähnlich wirksame Spanngliederanordnung durch Verwendung einer Vielzahl von kreisförmig begrenzten Scheiben 60, die durch Zwischenscheiben 61 auf Abstand 57 gehalten und auf einen Federstrang 59 aufgezogen sind, erreicht werden kann.

**Patentansprüche**

1. Vorrichtung zum gegenseitigen Zentrieren und Spannen von zwei miteinander zu verschweißenden, eine runde Bohrung enthaltenden Werkstücken (1, 2; 50, 51), die für jedes der Werkstücke beiderseits eines mit Schutzgaszuführung versehenen Schweißbereichs (9) eine Spanneinheit aufweist, die wenigstens eine Umfangsreihe von in einer Spann-Nut (36, 39, 42) enthaltenen Spanngliedern (3) umfaßt, die durch gegenseitige axiale Näherung bzw. Entfernung der Flanken (52, 53) der Spann-Nut nach außen spannbar bzw. nach innen entspannbar sind und eine nach außen weisende Spannfläche (54) für den Kontakt mit der Bohrungsfläche des Werkstücks sowie in Umfangsrichtung voneinander Abstand (57) aufweisen und deren Zwischenräume von dem Schutzgas durchströmt sind, dadurch gekennzeichnet, daß die Reihe von Spanngliedern von einer Vielzahl in Umfangsrichtung mit geringem Abstand (57) voneinander angeordneten Windungen (56) einer Schraubenfeder (3) gebildet ist.

2. Vorrichtung zum gegenseitigen Zentrieren und Spannen von zwei miteinander zu verschweißenden, eine runde Bohrung enthaltenden Werkstücken (1, 2; 50, 51), die für jedes der Werkstücke beiderseits eines mit Schutzgaszuführung versehenen Schweißbereichs (9) eine Spanneinheit aufweist, die wenigstens eine Umfangsreihe von in einer Spann-Nut (36, 39, 42) enthaltenen Spanngliedern (3) umfaßt, die durch gegenseitige axiale Näherung bzw. Entfernung der Flanken (52, 53) der Spann-Nut nach außen spannbar bzw. nach innen entspannbar sind und eine nach außen weisende Spannfläche (54) für den Kontakt mit der Bohrungsfläche des Werkstücks sowie in Umfangsrichtung voneinander Abstand (57) aufweisen und deren Zwischenräume von dem Schutzgas durchströmt sind, dadurch gekennzeichnet, daß die Reihe von Spanngliedern von einem Federstrang (59) mit einer Vielzahl von aufgereihten Scheiben (60), die durch Zwischenscheiben (61) auf Abstand gehalten sind, gebildet ist.

3. Vorrichtung nach Anspruch 1, dadurch gekennzeichnet, daß die Spannflächen (54) im wesentlichen punktförmig sind.

4. Vorrichtung nach einem der Ansprüche 1 bis 3, dadurch gekennzeichnet, daß in Umfangsrichtung die Weite der Zwischenräume (57) geringer ist als die Breite der Spannglieder (56, 60).

5. Vorrichtung nach einem der Ansprüche 1 bis 4, dadurch gekennzeichnet, daß sie zwischen den dem Schweißbereich (9) benachbarten Spann-Nuten (28) eine umlaufende, die Schutzgaszuführung (27) enthaltende, umlaufende Vertiefung bildet und eine Nutwand (30, 31) zwischen dieser Vertiefung und jeder Spann-Nut zur weitgehenden Abschirmung der Spannglieder (3) vom Schweißbereich (4) vorgesehen ist.

6. Vorrichtung nach Anspruch 5, dadurch gekennzeichnet, daß zumindest die dem Schweißbereich (9) zugewandte Nutwand (30, 31) einen Außendurchmesser besitzt, der nur wenig geringer ist als der lichte Durchmesser der Werkstückbohrung.

7. Vorrichtung nach einem der Ansprüche 1 bis 6, dadurch gekennzeichnet, daß wenigstens eine Spanneinheit zwei Spanngliederreihen in axialem Abstand voneinander aufweist.

8. Vorrichtung nach einem der Ansprüche 1 bis 7, dadurch gekennzeichnet, daß die einander nächsten Nutwände, die zu zwei aufeinanderfolgenden Spanngliederreihen gehören, durch eine Buchse (40) verbunden auf einem Haltekörper (21) sitzen.

9. Vorrichtung nach Anspruch 8, dadurch gekennzeichnet, daß der Haltekörper (21) den Nutgrund der die Spannglieder aufnehmenden Spann-Nuten (36, 39, 42) bildet.

10. Vorrichtung nach Anspruch 8, dadurch gekennzeichnet, daß die zu derselben Spanneinheit gehörenden Nutwände auf dem Haltekörper (21) gemeinsam verschiebbar sind.

11. Vorrichtung nach Anspruch 8, dadurch gekennzeichnet, daß die zu verschiedenen Spanneinheiten gehörenden Nutwände fest am Haltekörper (21) angeordnet sind und dieser — mindestens einerseits durch eine Feder (13a, 13b) abgestützt — im Wege der Antriebskraft angeordnet ist.

12. Vorrichtung nach einem der Ansprüche 1 bis 11, dadurch gekennzeichnet, daß für beide gesondert betätigbaren Spanneinheiten nur ein Antrieb vorgesehen ist und alle Spann-Nuten der beiden Spanneinheiten in bezug auf den Antrieb hintereinander geschaltet sind, wobei parallel zu den Spann-Nuten einer der Spanneinheiten eine der Antriebskraft entgegenwirkende Feder (13a, 13b) vorgesehen ist.

13. Vorrichtung nach einem der Ansprüche 1 bis 3, dadurch gekennzeichnet, daß für den Haltekörper (21) ein Kühlflüssigkeitskreislauf (22, 23, 24) vorgesehen ist.

14. Vorrichtung nach einem der Ansprüche 1 bis 33, dadurch gekennzeichnet, daß Schutzgas als Druckmittel für den Antrieb verwendet ist.

## Claims

1. A device for the mutual centering and clamping of two workpieces (1, 2; 50, 51) to be welded together and having a circular bore, which for each of the workpieces has on either side of a welding zone (9) provided with a protective gas feed a clamping unit which comprises at least one peripheral row of clamping members (3) which are accommodated in a clamping groove (36, 39, 42) and which can be outwardly tightened and inwardly loosened respectively by mutual axial bringing together or moving apart of the sides (52, 53) of the clamping groove, and have an outwardly facing clamping surface (54) for contact with the bore surface of the workpiece and also are arranged at a distance (57) from one another in the peripheral direction and the protective gas flows through the spaces between them, characterised in that the row of clamping members is formed by a plurality of coils (56) of a coil spring (3), arranged at a small distance (57) apart in the peripheral direction.

2. A device for the mutual centering and clamping of two workpieces (1, 2; 50, 51) to be welded together and having a circular bore, which for each of the workspieces has on either side of a welding zone (9) provided with a protective gas feed a clamping unit which comprises at least one peripheral row of clamping members (3) which are accommodated in a clamping groove (36, 39, 42) and which can be outwardly tightened and inwardly loosened respectively by mutual axial bringing together or moving apart of the sides (52, 53) of the clamping groove, and have an outwardly facing clamping surface (54) for contact with the bore surface of the workpiece and also are arranged at a distance (57) from one another in the peripheral direction and the protective gas flows through the spaces between them, characterised in that the row of clamping members is formed by a spring cord (59) with a plurality of discs (60) arranged in a row, which are maintained spaced apart by shims (61).

3. A device according to Claim 1, characterised in that the clamping surfaces (54) are substantially point-like.

4. A device according to any one of Claims 1 to 3, characterised in that in the pheriperal direction the width of the spaces (57) is less than the width of the clamping members (56, 60).

5. A device according to any one of Claims 1 to 4, characterised in that between the clamping grooves (28) adjacent the welding zone (9) there is formed an annular recess containing the protective gas feed (27) and a groove wall (30, 31) is provided between this recess and each clamping groove for extensively shielding the clamping members (3) from the welding zone (4) [sic].

6. A device according to Claim 5, characterised in that at least the groove wall (30, 31) nearest the welding zone (9) has an outer diameter which is only slightly smaller than the inside diameter of the workpiece bore.

7. A device according to any one of Claims 1 to 6, characterised in that at least one clamping unit has two rows of clamping members spaced apart axially.

8. A device according to any one of Claims 1 to 7, characterised in that the groove walls nearest to one another, which are associated with two successive rows of clamping members, are connected by a sleeve (40) and seated on a retaining member (21).

9. A device according to Claim 8, characterised in that the retaining member (21) forms the groove base of the clamping grooves (36, 39, 42) accommodating the clamping members.

10. A device according to Claim 8, characterised in that the groove walls associated with the same clamping unit are together displaceable on the retaining member (21).

11. A device according to Claim 8, characterised in that the groove walls associated with different clamping units are arranged fixed on the retaining member (21) and the latter is disposed in the path of the drive force — supported at least on one side by a spring (13a, 13b).

12. A device according to any one of Claims 1 to 11, characterised in that only one drive means is provided for both separately actuatable clamping units and all the clamping grooves of the both clamping units are connected consecutively in relation to the drive means, a spring (13a, 13b) opposing the drive force being provided parallel to the clamping grooves of one of the clamping units.

13. A device according to any one of Claims 1 to 3, characterised in that a coolant circuit (22, 23, 24) is provided for the retaining member (21).

14. A device according to any one of Claims 1 to 13, characterised in that the protective gas is used as a pressure medium for the drive means.

**Revendications**

1. Dispositif de centrage et de serrage mutuels de deux pièces à usiner (1, 2; 50, 51) qui contiennent une forure ronde et qui doivent être soudées ensemble, comportant pour chacune des pièces à usiner, de part et d'autre d'une région de soudage (9) munie d'une admission de gaz protecteur, une unité de serrage qui comprend au moins une rangée circonférentielle d'éléments de serrage (3) contenus dans une rainure de serrage (36, 39, 42), éléments qui peuvent être serrés vers l'extérieur ou desserrés vers l'intérieur, respectivement par rapprochement et éloignement axial mutuel des flancs (52, 53) de la rainure de serrage, et qui présentent une surface de serrage (54) dirigée vers l'extérieur pour le contact avec la surface de la forure de la pièce à usiner, ainsi qu'une distance mutuelle (57) dans la direction circonférentielle, et dont les intervalles sont parcourus par le gaz protecteur, caractérisé en ce que la rangée d'éléments de serrage est constituée par une multiplicité de spires (56) d'un ressort à boudin (3), disposées à faible distance (57) les unes des autres dans la direction circonférentielle.

2. Dispositif de centrage et de serrage mutuels de deux pièces à usiner (1, 2; 50, 51) qui contiennent une forure ronde et qui doivent être soudées ensemble, comportant pour chacune des pièces à usiner, de part et d'autre d'une région de soudage (9) munie d'une admission de gaz protecteur, une unité de serrage qui comprend au moins une rangée circonférentielle d'éléments de serrage (3) contenus dans une rainure de serrage (36, 39, 42), éléments qui peuvent être serrés vers l'extérieur ou desserrés vers l'intérieur, respectivement par rapprochement et éloignement axial mutuel des flancs (52, 53) de la rainure de serrage, et qui présentent une surface de serrage (54) dirigée vers l'extérieur pour le contact avec la surface de la forure de la pièce à usiner, ainsi qu'une distance mutuelle (57) dans la direction circonférentielle, et dont les intervalles sont parcourus par le gaz protecteur, caractérisé en ce que la rangée d'éléments de serrage est constituée par un fil à ressort (59) sur lequel est enfilée une multiplicité de disques (60) qui sont maintenus à distance les uns des autres par des disques intermédiaires (61).

3. Dispositif selon la revendication 1, caractérisé en ce que les surfaces de serrage (54) sont pratiquement punctiformes.

4. Dispositif selon l'une quelconque des revendications 1 à 3, caractérisé en ce qu'en direction circonférentielle, l'étendue des intervalles (57) est plus petite que la largeur des éléments de serrage (56, 60).

5. Dispositif selon l'une quelconque des revendications 1 à 4, caractérisé en ce qu'il forme tout autour, entre les rainures de serrage (28) voisines de la région de soudage (9), un creux qui contient l'admission de gaz protecteur (27), et en ce qu'il est prévu une paroi de rainure (30, 31) entre ce creux et chaque rainure de serrage, pour faire écran entre la région de soudage (4) et les éléments de serrage (3) et protéger ceux-ci dans une large mesure.

6. Dispositif selon la revendication 5, caractérisé en ce qu'au moins la paroi de rainure (30, 31) du côté de la région de soudage (9) a un diamètre extérieur qui n'est que faiblement inférieur au diamètre intérieur de la forure de la pièce à usiner.

7. Dispositif selon l'une quelconque des revendications 1 à 6, caractérisé en ce qu'au moins une unité de serrage comporte deux rangées d'éléments de serrage à distance axiale l'une de l'autre.

8. Dispositif selon l'une quelconque des revendications 1 à 7, caractérisé en ce que les parois de rainure les plus proches l'une de l'autre, qui appartiennent à deux rangées successives d'éléments de serrage, sont situées sur un corps de support (21) et reliées par une douille (40).

9. Dispositif selon la revendication 8, caractérisé en ce que le corps de support (21) constitue le fond des rainures de serrage (36, 39, 42) qui reçoivent les éléments de serrage.

10. Dispositif selon la revendication 8, caractérisé en ce que les parois de rainure appartenant à la même unité de serrage peuvent être déplacées ensemble sur le corps de support (21).

11. Dispositif selon la revendication 8, caractérisé en ce que les parois de rainure appartenant à des unités de serrage différentes sont disposées en position fixe sur le corps de support (21), et en ce que celui-ci — soutenu au moins d'un côté par un ressort (31a, 13b) — est disposé dans la trajectoire de la force motrice.

12. Dispositif selon l'une quelconque des revendication 1 à 11, caractérisé en ce qu'il n'est prévu qu'un mécanisme moteur pour les deux unités de serrage actionnables séparément, et en ce que toutes les rainures de serrage des deux unités de serrage sont montées en série par rapport au mécanisme moteur, un ressort (13a, 13b) antagoniste de la force motrice étant prévu en parallèle sur les rainures de serrage de l'une des unités de serrage.

13. Dispositif selon l'une quelconque des revendications 1 à 3, caractérisé en ce qu'un circuit de liquide de refroidissement (22, 23, 24) est prévu pour le corps de support (21).

14. Dispositif selon l'une quelconque des revendications 1 à 13, caractérisé en ce que le gaz protecteur est utilisé comme fluide sous pression pour le mécanisme moteur.

Fig.1

EP 0 214 868 B1

Fig.2

EP 0 214 868 B1

Fig. 3

## Fig.4

## Fig.6

## Fig.5